(19) Europäisches Patentamt
European Patent Office
Office européen des brevets

(11) **EP 1 431 775 B1**

(12) **EUROPÄISCHE PATENTSCHRIFT**

(45) Veröffentlichungstag und Bekanntmachung des Hinweises auf die Patenterteilung:
**25.07.2012  Patentblatt 2012/30**

(51) Int Cl.:
*G01S 13/58* (2006.01)    *G01S 13/93* (2006.01)

(21) Anmeldenummer: **03024218.4**

(22) Anmeldetag: **22.10.2003**

(54) **Vorrichtung und Verfahren zur Ermittlung der Relativbeschleunigung**

Method and system for determining a relative acceleration

Méthode et système pour la détermination de l'accélération relative

(84) Benannte Vertragsstaaten:
**AT BE BG CH CY CZ DE DK EE ES FI FR GB GR HU IE IT LI LU MC NL PT RO SE SI SK TR**

(30) Priorität: **21.12.2002  DE 10260492**

(43) Veröffentlichungstag der Anmeldung:
**23.06.2004  Patentblatt 2004/26**

(73) Patentinhaber: **Volkswagen Aktiengesellschaft 38440 Wolfsburg (DE)**

(72) Erfinder:
• **Meinecke, Marc-Michael, Dr.
 38524 Sassenburg (DE)**
• **Bartels, Arne, Dr.
 38108 Braunschweig (DE)**
• **Behrens, Marc
 38106 Braunschweig (DE)**
• **Mende, Ralph, Dr.
 38102 Braunschweig (DE)**

(56) Entgegenhaltungen:
**EP-A- 1 028 323    WO-A-01/48512
US-A- 3 386 093    US-B1- 6 437 729**

**Beschreibung**

Die Erfindung betrifft eine Vorrichtung und ein Verfahren zur Ermittlung einer Relativbeschleunigung zwischen einem Fahrzeug und einem Objekt.

Fahrassistenzsysteme und/oder Systeme in Fahrzeugen zur Verfolgung hochdynamischer Vorgänge im Straßenverkehr benötigen Angaben über Entfernungen, Winkel, Relativgeschwindigkeiten und/oder Relativbeschleunigungen des Fahrzeugs zu anderen Objekten, beispielsweise anderen Verkehrsteilnehmern und/oder immobilen Hindernissen. Es ist bekannt, einen Abstand, einen Winkel und/oder eine Relativgeschwindigkeit zwischen einem Fahrzeug und einem Objekt durch Sensoren zu messen. Hierfür ist beispielsweise aus der DE 40 07 249 A1 eine Vorrichtung zur Erfassung der Relativgeschwindigkeit bekannt, wobei das Fahrzeug mittels Radarmodul einen Radarstrahl mit einer Trägerfrequenz sendet, welcher von einem zweiten Fahrzeug reflektiert wird und von dem Radarmodul empfangen wird. Infolge der Relativgeschwindigkeit zwischen den Fahrzeugen kommt es zu einer Frequenzverschiebung des Radarstrahls (Dopplereffekt). Unter Verwendung einer Fourier-Transformation wird die Frequenzverschiebung aus dem am Radarmodul abgetasteten Messsignal ermittelt und damit die Relativgeschwindigkeit gemäß bekannter Gleichung berechnet. Die Vorrichtung umfasst eine Schaltung, durch welche Änderungen der Frequenzverschiebung qualitativ beurteilt werden. Änderungen der Frequenzverschiebung lassen auf Änderung der Relativgeschwindigkeit, d.h. auf Relativbeschleunigungen schließen. Aufgrund der qualitative Erfassung der Relativbeschleunigung werden Warnsignale erzeugt.

Es ist weiter bekannt, Werte der Relativbeschleunigung durch zweifaches Ableiten von Entfernungsmessungen und/oder durch Ableiten der Relativgeschwindigkeit sowie Tiefpassfilterung zu ermitteln. Die Relativbeschleunigung weist jedoch ein unstetiges Verhalten auf, welches durch Ableitungen nicht oder nur schlecht erfassbar ist.

Aus der WO 01/48512 A1 ist ein Verfahren zur Erfassung und Auswertung von Objekten im Umgebungsbereich eines Fahrzeuges bekannt, bei dem mit mindestens einem Radarsensor die Zielobjekte in einem Überwachungsbereich erfasst und in mindestens einer Auswerteeinheit die Entfernungs- und/oder Geschwindigkeitsdaten der Zielobjekte ausgewertet werden, wobei die Erfassung der Geschwindigkeit der Zielobjekte innerhalb einer in der Entfernung vom Fahrzeug und in seiner Länge veränderbaren virtuellen Barriere erfolgt. Dabei wird vorgeschlagen, dass aus zwei aufeinanderfolgenden Messungen der Dopplerfrequenz Relativgeschwindigkeiten gewonnen werden, aus denen dann eine Relativbeschleunigung berechnet werden kann.

Aus der EP 1 028 323 A2 ist ein Verfahren zur Signalerzeugung und Signalverarbeitung in Impuls-Radargeräten zur Detektion von Radarzielen bekannt, wobei sich wiederholende Pulsfolgen ausgesendet werden, die jeweils eine erste und eine zweite vorbestimmte Anzahl von einzelnen Impulsen aufweisen, deren Trägerfrequenzen jeweils eine vorbestimmte Differenz zueinander aufweisen, wobei die durch Reflexionen empfangenen Signale zum Erkennen und Ausblenden von Clustersignalen im Hinblick auf die Impulslaufzeit und eine Dopplerverschiebung ausgewertet werden. Dabei werden in einem Verarbeitungsschritt für die erste Anzahl von empfangenen Impulsen Abtastwerte erzeugt, die mit einer Fensterfunktion gewichtet sind und durch eine erste FFT in den Spektralbereich transformiert werden. Anschließend wird das Abtastfenster um s-Schritte verschoben.

Aus der US-6,380,883 B1 ist ein Radarsystem für Kraftfahrzeuge bekannt, dass neben der Position und Geschwindigkeit auch die Beschleunigung von Objekten erfasst.

Aus der US-6,087,928 A ist eine Vorrichtung zur Erfassung einer Relativbeschleunigung zwischen einem Fahrzeug und einem Objekt bekannt, wobei das Fahrzeug mindestens einen Sensor umfasst und durch den Sensor mindestens ein Messsignal über einen Beobachtungszeitraum erfasst wird, wobei das Messsignal wellenförmig ist, wobei aus dem Messsignal eine Doppelfrequenz im Beobachtungszeitraum durch eine Frequenzanalyse des Messsignals ermittelt wird. Aus der Dopplerfrequenz wird eine Geschwindigkeit berechnet. Durch Abspeichern des ermittelten Ortes und der Geschwindigkeit des Objektes in aufeinanderfolgenden Beobachtungszeiträumen kann die Änderung der Geschwindigkeit und somit die Beschleunigung bestimmt werden.

Der Erfindung liegt daher das technische Problem zugrunde, eine Vorrichtung und ein Verfahren für eine verbesserte Erfassung der Relativbeschleunigung zu schaffen.

Die Lösung des Problems ergibt sich durch die Gegenstände mit den Merkmalen der Ansprüche 1 und 9. Weitere vorteilhafte Ausgestaltungen der Erfindung ergeben sich aus den Unteransprüchen.

Hierfür wird durch einen Sensor mindestens ein Messsignal, umfassend mindestens zwei Messwerte, über einen Beobachtungszeitraum erfasst und eine quantitative Änderung der Messwerte in dem Beobachtungszeitraum ermittelt, wobei eine Relativbeschleunigung zwischen dem Fahrzeug und einem Objekt über den Beobachtungszeitraum aus der Änderung bestimmt wird.

Dabei ist das Messsignal wellenförmig, wobei aus dem Messsignal mindestens eine Dopplerfrequenz im Beobachtungszeitraum ermittelt wird. Die Dopplerfrequenz ist proportional zu einer Relativgeschwindigkeit zwischen dem Fahrzeug und dem Objekt über den Beobachtungszeitraum. Eine Ermittlung der Dopplerfrequenz erfolgt beispielsweise durch eine Fourieranalyse. Das Unschärfeprinzip der Nachrichtentechnik besagt, dass Beobachtungszeit und Frequenzband antiproportional zusammenhängen. D.h., je länger die Beobachtungszeit gewählt wird, desto enger ist das Frequenzband. Zur genauen Messung der Dopplerfrequenz ist daher ein gewisser Beobachtungszeitraum erforderlich. Der Beobachtungszeitraum bestimmt somit auch einen zeitlichen Abstand zwischen zwei aufeinanderfolgenden Messungen der Relativgeschwindigkeit. Hierzu ist der Beobachtungszeitraum in mindestens zwei Bereiche aufgeteilt, wobei für mindestens zwei Bereiche jeweils mindestens ein Phasenwinkel der Spektrallinien ermittelt wird, wobei eine Differenz der Phasenwinkel ermittelt wird, wobei aus der Differenz die Relativbeschleunigung ermittelt wird, wodurch sich auch kleine Werte der Relativbeschleunigung erfassen lassen.

In einer bevorzugten Ausführungsform ist der Sensor als Radarsensor ausgebildet, wobei durch den Radarsensor elektromagnetische Wellen gesendet und als Messsignal empfangen werden.

Vorzugsweise wird zusätzlich über jeden der Bereiche eine Frequenz bestimmt, eine Differenz aufeinanderfolgender Frequenzen gebildet und die Relativbeschleunigung aus der Differenz ermittelt.

In einer weiteren Ausführungsform wird Beobachtungszeitraum in zwei gleichgroße Bereiche aufgeteilt, wobei für die Relativbeschleunigung näherungsweise gilt:

$$a \approx -\frac{c}{2f_T} \frac{f_2 - f_1}{T_{mess}/2} = -\frac{c}{f_T} \frac{f_2 - f_1}{T_{mess}}$$

mit der Trägerfrequenz $f_T$, dem Beobachtungszeitraum $T_{mess}$, der Lichtgeschwindigkeit $c$, sowie den in den zwei Bereichen ermittelten Frequenzen $f_1$, $f_2$.

In einer weiteren Ausführungsform wird der Beobachtungszeitraum abschnittsweise sequentiell unterteilt, wobei alle Bereiche eine gleiche Anzahl an Messwerten umfassen. Daneben ist es auch denkbar, die Unterteilung derart durchzuführen, dass die einzelnen Bereiche unterschiedliche Größen aufweisen. Für eine Umsetzung einfacher und rechenzeitoptimierter Verfahren ist jedoch eine Unterteilung in Bereiche gleicher Größe zu bevorzugen.

In einer weiteren Ausführungsform werden die Frequenzen in den Bereichen mittels Fourier-Transformationen ermittelt. Steht nur eine endliche Anzahl an Stützwerten für das zu untersuchenden Frequenzspektrum zur Verfügung, so ergibt sich ein diskretes Frequenzspektrum. Ein effektiver Algorithmus zur Ermittlung diskreter Frequenzspektren ist eine Fast Fourier-Transformation (FFT). Daneben ist es auch denkbar, eine Wavelet Transformation für die Frequenzanalyse zu verwenden.

In einer weiteren Ausführungsform wird das Messsignal in mindestens zwei Bereiche unterteilt, wobei ein Bereich aus einer Anzahl $N_0$ an Messwerten gebildet wird und die Messwerte aufeinanderfolgender Bereiche um eine Schrittfolge $1 \leq k < N_0$ verschobenen sind. Zur Bestimmung der Frequenzen und/oder Phasen ist jeweils ein Messsignal mit $N_0$ Messwerten und/oder einem damit assoziierten Beobachtungszeitraum erforderlich. Durch eine Überlappung aufeinanderfolgender Bereiche ist ein zeitlicher Abstand zwischen zwei aufeinanderfolgenden bestimmbaren Frequenzen verringerbar. Die Wahl der Schrittfolge $k$ ist dabei abhängig von einer verfügbaren Rechenleistung.

Die Werte der Relativbeschleunigung sind in einer bevorzugten Ausführungsform durch mindestens ein Fahrassistenzsystem nutzbar. Denkbare Fahrassistenzsysteme sind beispielsweise Automatic Cruise Control (ACC), Automatische Notbremssysteme (ANB), PreCrash-Systeme und/oder unfallvermeidendes Auto (UvA).

Die Erfindung wird nachfolgend anhand eines bevorzugten Ausführungsbeispiels näher erläutert. Die Figuren zeigen:

Fig. 1:    eine schematische Darstellung eines Fahrzeugs mit einem Radarsensor.
Fig. 2:    möglicher Verlauf eines Messsignals über n Beobachtungszeiträume $T_{mess}$ und
Fig. 3:    eine Einteilung des Messsignals im Beobachtungszeitraum $T_{mess,3}$ in m Bereiche $B_1$, $B_2$, ..., $B_m$

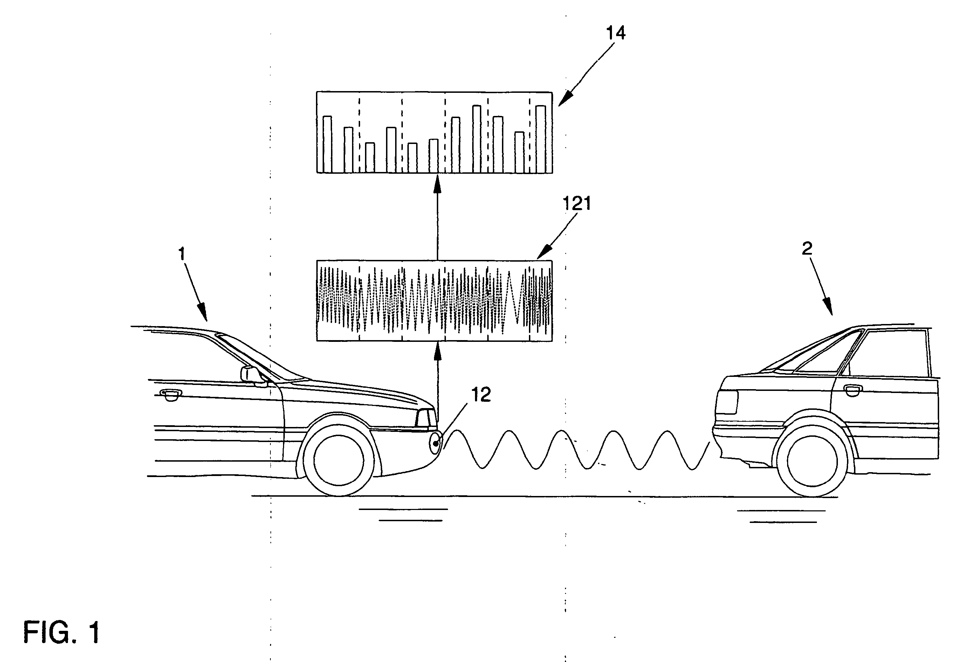

Fig. 1 zeigt schematisch ein Fahrzeug 1 mit einem Radarsensor 12. Durch den Radarsensor 12 lassen sich eine Entfernung, eine Relativgeschwindigkeit und ein Azimutwinkels von einem vorausfahrenden Fahrzeug 2 und/oder von anderen bewegten oder immobilen Objekten präzise messen. Daneben lassen sich Entfernung und/oder Azimutwinkel auch durch andere Sensoren messen, beispielsweise eine Lasersensor und/oder bildgebende Sensoren wie Videokameras. Die durch den Radarsensor 12 gesendet elektromagnetische Welle wird durch das Fahrzeug 2 reflektiert und durch eine Empfangseinheit 121 aufgenommen. Messgröße für eine Messung der Relativgeschwindigkeit zwischen den Fahrzeugen 1, 2 ist eine Frequenz der Dopplerschwingung der reflektierten elektromagnetischen Welle. Die Frequenz der empfangenen Welle ist beispielsweise mittels Fourieranalyse in einer Recheneinheit 14 aus dem empfangenen Signal ermittelbar. Die Recheneinheit 14 ist beispielsweise als unabhängige Recheneinheit oder als Element des Radarsensors 12 ausgebildet. Aufgrund der Relativbewegung zwischen den Fahrzeugen 1,2 kommt es zu einer Verschiebung zwischen eine Sendefrequenz des Radarsensors 12, der sogenannten Trägerfrequenz, und einer Frequenz der durch die Empfangseinheit 121 empfangenen, reflektierten Welle, dabei gilt für die Dopplerfrequenz $\Delta f$ des Radarstrahls

$$\Delta f = 2v \left( \frac{f_T}{c} \right),$$

mit der Relativgeschwindigkeit $v$ und der Lichtgeschwindigkeit $c$.

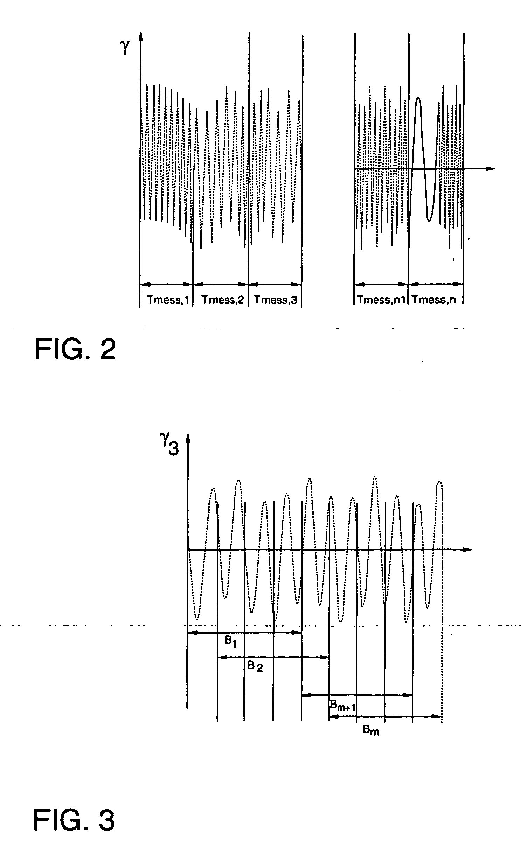

Fig. 2 zeigt exemplarisch einen möglichen Verlauf eines Messsignals $y$ über $n$ Beobachtungszeiträume $T_{mess}$. Zugehörige Frequenzen werden durch geeignete Verfahren, wie beispielsweise eine Fourier-Transformation und/oder eine Verwendung von Wavelets, bestimmt. Für eine präzise Bestimmung einer Frequenz ist gemäß der Unschärferelation der Nachrichtentechnik mindestens ein minimaler Beobachtungszeitraum $T_{min}$ zur Aufnahme eines Messsignals $y$ erforderlich. Für die Beobachtungszeiträume muss somit $T_{min} \leq T_{mess}$ gewählt werden. Erfindungsgemäß wird während des Beobachtungszeitraums $T_{mess}$ nicht nur eine Messung der Frequenz sondern zusätzliche Messung der Frequenzänderung durchgeführt. Durch die Frequenzänderung ist eine direkte Bestimmung der Relativbeschleunigung möglich. Dadurch ist ein unstetiger Verlauf der Relativbeschleunigung besser erfassbar als durch ein einfaches Ableiten des Relativgeschwindigkeitssignals und/oder ein zweifaches Ableiten eines ermittelten Abstands.

In einem Beobachtungszeitraum werden $N$ Abtastwerte des Messsignals $y$ gesammelt. Die Abtastwerte werden in mindestens zwei Sequenzen unterteilt.

Beispielsweise werden die Abtastwerte in zwei gleichgroße Teile aufgeteilt, welche jeweils die Dauer $T_{mess}/2$ besitzen. In beiden Teilen kann jeweils beispielsweise durch Fourier-Transformation eine Frequenz $f_1$, $f_2$ bestimmt werden und die Beschleunigung $a$ ergibt sich aus

$$a \approx -\frac{c}{2f_T} \frac{f_2 - f_1}{T_{mess}/2} = -\frac{c}{f_T} \frac{f_2 - f_1}{T_{mess}}$$

Daneben ist auch eine Aufteilung in Sequenzen unterschiedlicher Größe denkbar. Dies kann von Vorteil sein, wenn beispielsweise die eine Sequenz eine wesentlich höherfrequente Schwingung aufweist, so dass hier ein geringer Beobachtungszeitraum für eine Bestimmung ausreichend ist.

Zusätzlich zu einer Bestimmung der Frequenzen werden auch Phasen $\varphi_1$, $\varphi_2$ der Spektrallinien bei den Frequenzen $f_1$, $f_2$ und eine zugehörige Differenzphase $\Delta\varphi = \varphi_2 - \varphi_1$ ermittelt. Die Differenzphase ist proportional zur Relativbeschleunigung. Damit werden auch kleine Relativbeschleunigungswerte messbar.

Nach einer anderen Ausführungsform erfolgt eine Aufteilung des Messsignals $y$ über den Beobachtungszeitraum $T_{mess}$ in $m$ Sequenzen $y_1$, $y_2$, ..., $y_m$, welche jeweils $N_0$ Abtastwerte umfassen. Dabei gilt für $i=l...m$:

$$y_i(j) = \begin{cases} y(j), & \text{für} & (i-1)N_0 \leq j \leq i \cdot N_0 - 1 \\ 0, & \text{sonst} \end{cases}$$

Für jeden Sequenz $y_1$, $y_2$, ..., $y_m$ wird eine Fourier-Transformation durchgeführt und eine Frequenz $f_1$, $f_2$, ..., $f_m$ sowie eine gehörigen Phase $\varphi_1$, $\varphi_2$ ..., $\varphi_m$ ermittelt. Die Relativbeschleunigung wird aus dem Differenzwinkeln $\Delta\varphi = \varphi_{i+1} - \varphi_i$ $(i=l...m-1)$ bestimmt.

Hierfür werden beispielsweise die ermittelten Phasen $\varphi_1$, $\varphi_2$ ..., $\varphi_m$ als komplexe Zeiger dargestellt. Die Amplituden sind dabei nicht von Interesse und können beliebig gewählt werden. In der so erhaltenen Darstellung ist ein rotierender Zeiger erkennbar, dessen Rotationsgeschwindigkeit proportional zur Relativbeschleunigung ist. Dadurch ist eine einfache und schnelle Auswertung gegeben.

Fig. 3 zeigt eine Einteilung des Messsignals $y$ im Beobachtungszeitraum $T_{mess,3}$ in $m$ Bereiche $B_1$, $B_2$, ..., $B_m$, wobei die Bereiche $B_1$, $B_2$, ..., $B_m$ einander überlappen. Wie bereits erwähnt, ist für eine zuverlässige Bestimmung einer Frequenz ein minimaler Beobachtungszeitraum erforderlich. Eine Aufteilung des Beobachtungszeitraums beliebig viele und/oder beliebig kleine Sequenzen ist daher beschränkt. Die Bestimmung der Bereiche erfolgt daher unter Verwendung eines Schieberegisters, welches entweder als Hardware- und/oder als Software-Komponente realisierbar ist. Das Schieberegister unterteilt das Messsignal $y$ in $m$ Bereiche $B_1$, $B_2$, ..., $B_m$ mit jeweils $N_0$ Messwerten. Ein Bereich $B_i$ umfasst dabei die Messwerte $y((i-1) \cdot k),..., y((i-1) \cdot k + N_0 - 1)$ mit einer Schrittweite $k$, durch welche der zeitliche Abstand zwischen zwei aufeinanderfolgenden Bereichen und damit zwischen zwei aufeinanderfolgenden Ermittlung der Frequenz bestimmt wird. Ein Einsatz des Schieberegisters ist auch für eine Bestimmung der Relativgeschwindigkeit ohne zusätzliche Messung der Relativbeschleunigung denkbar.

Durch eine genaue Ermittlung der Relativbeschleunigung wird eine Verfolgung hochdynamischer Vorgänge im Straßenverkehr verbessert. Typische Anwendungen, welche durch Werte der Relativbeschleunigungen verbessert werden, sind ACC, ANB, UvA und/oder PreCrash, sowie weitere Fahrerassistenzsysteme zur Verbesserung der Sicherheit im Straßenverkehr durch passive Maßnahmen.

**Patentansprüche**

1. Vorrichtung zur Erfassung einer Relativbeschleunigung (*a*) zwischen einem Fahrzeug (1) und einem Objekt, wobei das Fahrzeug (1) mindestens einen, eine elektromagnetische Welle der Trägerfrequenz ($f_T$) sendenden Sensor umfasst und durch den Sensor mindestens ein Messsignal (*y*) über einen Beobachtungszeitraum $T_{mess}$ erfasst wird, wobei das Messsignal (*y*) wellenförmig ist und sich durch Reflexion des Signals der Trägerfrequenz ($f_T$) an einem Objekt ergibt, wobei aus dem Messsignal (*y*) eine Dopplerfrequenz im Beobachtungszeitraum $T_{mees}$ durch eine Frequenzanalyse des Messsignals (*y*) ermittelt wird, **dadurch gekennzeichnet, dass** der Zeitraum $T_{mess}$ in mindestens zwei Bereiche ($B_1, B_2, ..., B_m$) aufgeteilt ist, wobei für mindestens zwei Bereiche ($B_1, B_2, ..., B_m$) jeweils mindestens ein Phasenwinkel ($\varphi_1, \varphi_2 ..., \varphi_m$) der Spektrallinien in den Frequenzen ($f_1, f_2, ..., f_m$) ermittelt wird, wobei eine Differenz der Phasenwinkel ($\Delta\varphi = \varphi_{i+1} - \varphi_i$) ermittelt wird, wobei aus der Differenz die Relativbeschleunigung ermittelt wird.

2. Vorrichtung nach Anspruch 1, **dadurch gekennzeichnet, dass** zusätzlich jeweils mindestens eine Frequenz ($f_1, f_2, ..., f_m$) der Spektrallinie in den Frequenzen ($f_1, f_2, ..., f_m$) ermittelt wird, wobei mindestens eine Differenz der Frequenzen ($f_1, f_2, ..., f_m$) ermittelt wird, wobei aus der Differenz die Relativbeschleunigung ermittelt wird.

3. Vorrichtung nach Anspruch 1 oder 2, **dadurch gekennzeichnet, dass** der Sensor als Radarsensor (12) ausgebildet ist, wobei durch den Radarsensor (12) elektromagnetische Wellen sendbar und als Messsignal (y) empfangbar sind.

4. Vorrichtung nach Anspruch 2 oder 3, **dadurch gekennzeichnet, dass** der Beobachtungszeitraum $T_{mess}$ in zwei gleichgroße Bereiche ($B_1, B_2$) mit den zugehörigen Frequenzen ($f_1, f_2,$) aufteilbar ist, wobei für die Relativbeschleunigung näherungsweise gilt:

$$a \approx \frac{c}{2f_T} \frac{f_2 - f_1}{T_{mess}/2} = \frac{c}{f_T} \frac{f_2 - f_1}{T_{mess}},$$

mit der Trägerfrequenz ($f_T$), dem Beobachtungszeitraum ($T_{mess}$), der Lichtgeschwindigkeit (*c*) sowie den in den zwei Bereichen ($B_1, B_2$) ermittelten Frequenzen ($f_1, f_2$).

5. Vorrichtung nach einem der Ansprüche 1 bis 3, **dadurch gekennzeichnet, dass** der Beobachtungszeitraum $T_{mess}$ abschnittsweise sequentiell unterteilbar ist, wobei alle Bereiche ($B_1, B_2, ..., B_m$) eine gleiche Anzahl an Messwerten umfassen.

6. Vorrichtung nach einem der vorangegangenen Ansprüche, **dadurch gekennzeichnet, dass** die Frequenzen ($f_1, f_2, ..., f_m$) mittels Fourier-Transformation ermittelbar sind.

7. Vorrichtung nach einem der genannten Ansprüche, **dadurch gekennzeichnet, dass** das Messsignal (*y*) in mindestens zwei Bereiche ($B_1, B_2, ..., B_m$) unterteilbar ist, wobei ein Bereich ($B_1, B_2, ..., B_m$) aus einer Anzahl ($N_0$) an Messwerten gebildet wird und die Messwerte aufeinanderfolgender Bereiche ($B_1, B_2, ..., B_m$) um eine Schrittfolge (*k*) verschobenen sind, wobei gilt $1 \leq k < N_0$.

8. Vorrichtung nach einem der genannten Ansprüche, **dadurch gekennzeichnet, dass** die Werte der Relativbeschleunigung (a) mindestens durch ein Fahrässistenzsystem nutzbar sind.

9. Verfahren zur Erfassung einer Relativbeschleunigung (a) zwischen einem Fahrzeug (1) und einem Objekt, wobei das Fahrzeug (1) mindestens einen, eine elektromagnetische Welle der Trägerfrequenz ($f_T$) sendenden Sensor umfasst und durch den Sensor mindestens ein Messsignal (y) über einen Beobachtungszeitraum $T_{mess}$ erfasst wird, wobei das Messsignal (y) wellenförmig ist und sich durch Reflexion des Signals der Trägerfrequenz ($f_T$) an einem Objekt ergibt, wobei aus dem Messsignal (y) eine Dopplerfrequenz im Beobachtungszeitraum $T_{mess}$ durch eine Frequenzanalyse des Messsignals (y) ermittelt wird,

**dadurch gekennzeichnet, dass**
der Zeitraum $T_{mess}$ in mindestens zwei Bereiche $(B_1, B_2, ..., B_m)$ aufgeteilt ist, wobei für mindestens zwei Bereiche $(B_1, B_2, ..., B_m)$ jeweils mindestens ein Phasenwinkel $(\varphi_1, \varphi_2 ..., \varphi m)$ der Spektrallinien in den Frequenzen $(f_1, f_2, ..., f_m)$ ermittelt wird, wobei mindestens eine Differenz der Phasenwinkel $(\Delta\varphi = \varphi_{i+1} - \varphi_i)$ ermittelt wird, wobei aus der Differenz die Relativbeschleunigung ermittelt wird.

10. Verfahren nach Anspruch 9, **dadurch gekennzeichnet, dass** zusätzlich jeweils mindestens eine Frequenz $(f_1, f_2, .., f_m)$ der Spektrallinie in den Frequenzen $(f_1, f_2, .., f_m)$ ermittelt wird, wobei mindestens eine Differenz der Frequenzen $(f_1, f_2, ..., f_m)$ ermittelt wird, wobei aus der Differenz die Relativbeschleunigung ermittelt wird.

11. Verfahren nach Anspruch 9 oder 10, **dadurch gekennzeichnet, dass** der Sensor als Radarsensor (12) ausgebildet ist, wobei durch den Radarsensor (12) elektromagnetische Wellen gesendet und als Messsignal (y) empfangen werden

12. Verfahren nach Anspruch 10 oder 11, **dadurch gekennzeichnet, dass** der Beobachtungszeitraum $(T_{mess})$ in zwei gleichgroße Bereiche $(B_1, B_2)$ mit den zugehörigen Frequenzen $(f_1, f_2)$ aufgeteilt wird, wobei für die Relativbeschleunigung näherungsweise gilt:

$$a \approx \frac{c}{2f_T} \frac{f_2 - f_1}{T_{mess}/2} = \frac{c}{f_T} \frac{f_2 - f_1}{T_{mess}} ,$$

μmit der Trägerfrequenz $(fT)$, dem Beobachtungszeitraum $(T_{mess})$, der Lichtgeschwindigkeit $(c)$ sowie den in den zwei Bereichen $(B_1, B_2)$ ermittelten Frequenzen $(f1, f2)$.

13. Verfahren nach Anspruch 10 oder 11, **dadurch gekennzeichnet, dass** der Beobachtungszeitraum $(T_{mess})$ abschnittsweise sequentiell unterteilt wird, wobei alle Bereiche $(B_1, B_2, ..., B_m)$ eine gleiche Anzahl an Messwerten umfassen.

14. Verfahren nach einem der Ansprüche 9 bis 13, **dadurch gekennzeichnet, dass** die Frequenzen $(f_1, f_2, ..., f_m)$ mittels Fourier-Transformationen ermittelt werden.

15. Verfahren nach einem der Ansprüche 9 bis 14, **dadurch gekennzeichnet, dass** das Messsignal (y) in mindestens zwei Bereiche $(B_1, B_2, ..., B_m)$ unterteilt wird, wobei ein Bereich $(B_1, B_2, ..., B_m)$ aus einer Anzahl $(N_0)$ an Messwerten gebildet wird und die Messwerte aufeinanderfolgender Bereiche $(B_1, B_2, ..., B_m)$ um eine Schrittfolge $(k)$ verschoben sind, wobei gilt $1 \leq k < N_0$.

16. Verfahren nach einem der Ansprüche 9 bis 15, **dadurch gekennzeichnet, dass** die Werte der Relativbeschleunigung $(a)$ mindestens durch ein Fahrassistenzsystem genutzt werden.

**Claims**

1. Device for detecting a relative acceleration $(a)$ between a vehicle (1) and an object, the vehicle (1) comprising at least one sensor that transmits an electromagnetic wave of the carrier frequency $(f_T)$ and at least one measuring signal (y) being detected by the sensor over an observation period of time $T_{meas}$, the measuring signal (y) being in the form of a wave and resulting through reflection of the signal of the carrier frequency $(f_T)$ on an object, a Doppler frequency in the observation period of time $T_{meas}$ being ascertained from the measuring signal (y) by a frequency analysis of the measuring signal (y),
**characterized in that** the period of time $T_{meas}$ is divided into at least two ranges $(B_1, B_2, ..., B_m)$, at least one phase angle $(\varphi_1, \varphi_2, ..., \varphi_m)$ of the spectral lines in the frequencies $(f_1, f_2, ..., f_m)$ being ascertained in each case for at least two ranges $(B_1, B_2, ..., B_m)$, a difference of the phase angles $(\Delta\varphi = \varphi_{i+1} - \varphi_i)$ being ascertained, the relative acceleration being determined from the difference.

2. Device according to Claim 1, **characterized in that** in addition respectively at least one frequency $(f_1, f_2, ..., f_m)$ of the spectral line in the frequencies $(f_1, f_2, ..., f_m)$ is ascertained, at least one difference of the frequencies $(f_1, f_2, ..., f_m)$ being ascertained, the relative acceleration being ascertained from the difference.

3. Device according to Claim 1 or 2, **characterized in that** the sensor is implemented as a radar sensor (12), electromagnetic waves being transmittable by the radar sensor (12) and being receivable as the measuring signal ($y$).

4. Device according to Claim 2 or 3, **characterized in that** the observation period of time $T_{meas}$ can be divided into two equal-sized ranges $(B_1, B_2)$ with the associated frequencies $(f_1, f_2)$, the following equation approximately applying for the relative acceleration:

$$a \approx \frac{c}{2 f_T} \frac{f_2 - f_1}{T_{meas}/2} = \frac{c}{f_T} \frac{f_2 - f_1}{T_{meas}} ,$$

with the carrier frequency ($f_T$), the observation period of time ($T_{meas}$), the speed of light (c), and the frequencies ($f_1$, $f_2$) ascertained in the two ranges ($B_1$, $B_2$).

5. Device according to one of Claims 1 to 3 ; **characterized in that** the observation period of time $T_{meas}$ can be sequentially subdivided into sections, all ranges ($B_1, B_2, ..., B_m$) comprising an equal number of measured values.

6. Device according to one of the preceding claims, **characterized in that** the frequencies ($f_1, f_2, ..., f_m$) can be ascertained by means of a Fourier transformation.

7. Device according to one of the preceding claims, **characterized in that** the measuring signal (y) can be subdivided into at least two ranges $(B_1, B_2, ..., B_m)$, one range $(B_1, B_2, ..., B_m)$ being formed from a number ($N_0$) of measured values and the measured values of successive ranges $(B_1, B_2, ..., B_m)$ being shifted by a step sequence (k), where $1 \leq k < N_0$.

8. Device according to one of the preceding claims, **characterized in that** the values of the relative acceleration ($a$) are usable at least by a driver assistance system.

9. Method for detecting a relative acceleration ($a$) between a vehicle (1) and an object, the vehicle (1) comprising at least one sensor that transmits an electromagnetic wave of the carrier frequency ($f_T$) and at least one measuring signal ($y$) being detected by the sensor over an observation period of time $T_{meas}$, the measuring signal ($y$) being in the form of a wave and resulting through reflection of the signal of the carrier frequency ($f_T$) on an object, a Doppler frequency being ascertained from the measuring signal ($y$) in the observation period of time $T_{meas}$ by a frequency analysis of the measuring signal ($y$),
**characterized in that** the period of time $T_{meas}$ is divided into at least two ranges $(B_1, B_2, ..., B_m)$, at least one phase angle ($\varphi_1, \varphi_2, ..., \varphi_m$) of the spectral lines in the frequencies $(f_1, f_2, ..., f_m)$ being ascertained in each case for at least two ranges $(B_1, B_2, ..., B_m)$, at least one difference of the phase angles ($\Delta\varphi = \varphi_{i+1} - \varphi_i$) being ascertained, the relative acceleration being ascertained from the difference.

10. Method according to Claim 9, **characterized in that** in addition respectively at least one frequency $(f_1, f_2, ..., f_m)$ of the spectral line in the frequencies $(f_1, f_2, ..., f_m)$ is ascertained, at least one difference of the frequencies ($f_1, f_2, ..., f_m$) being ascertained, the relative acceleration being ascertained from the difference.

11. Method according to Claim 9 or 10, **characterized in that** the sensor is implemented as a radar sensor (12), electromagnetic waves being transmitted by the radar sensor (12) and being received as the measuring signal ($y$).

12. Method according to Claim 10 or 11, **characterized in that** the observation period of time ($T_{meas}$) is divided into two equal-sized ranges ($B_1, B_2$) with the associated frequencies ($f_1, f_2$), the following equation approximately applying for the relative acceleration:

$$a \approx \frac{c}{2 f_T} \frac{f_2 - f_1}{T_{meas}/2} = \frac{c}{f_T} \frac{f_2 - f_1}{T_{meas}} ,$$

with the carrier frequency ($f_T$), the observation period of time ($T_{meas}$), the speed of light ($c$), and the frequencies ($f_1$, $f_2$) ascertained in the two ranges ($B_1$, $B_2$).

13. Method according to Claim 10 or 11, **characterized in that** the observation period of time ($T_{meas}$) is sequentially subdivided into sections, all ranges ($B_1$, $B_2$, ..., $B_m$) comprising an equal number of measured values.

14. Method according to one of Claims 9 to 13, **characterized in that** the frequencies ($f_1$, $f_2$, ..., $f_m$) are ascertained by means of Fourier transformations.

15. Method according to one of Claims 9 to 14, **characterized in that** the measuring signal ($y$) is subdivided into at least two ranges ($B_1$, $B_2$, ..., $B_m$), one range ($B_1$, $B_2$, ..., $B_m$) being formed from a number ($N_0$) of measured values and the measured values of successive ranges ($B_1$, $B_2$, ..., $B_m$) being shifted by a step sequence ($k$), where $1 \leq k < N_0$.

16. Method according to one of Claims 9 to 15, **characterized in that** the values of the relative acceleration ($a$) are used at least by a driver assistance system.


**Revendications**

1. Dispositif de détection d'une accélération relative (a) entre un véhicule (1) et un objet, le véhicule (1) comprenant au moins un détecteur qui émet une onde électromagnétique à la fréquence porteuse ($f_T$) et au moins un signal de mesure (y) étant détecté par le détecteur sur une période d'observation $T_{mess}$, le signal de mesure (y) étant de forme ondulatoire et résultant de la réflexion du signal à la fréquence porteuse ($f_T$) sur un objet, une fréquence Doppler étant déterminée à partir du signal de mesure (y) dans la période d'observation $T_{mess}$ par une analyse en fréquence du signal de mesure (y),
   **caractérisé en ce que**
   la période $T_{mess}$ est divisée en au moins deux plages ($B_1$, $B_2$, ..., $B_m$), à chaque fois au moins un angle de phase ($\varphi_1$, $\varphi_2$, ..., $\varphi_m$) des lignes spectrales étant déterminé pour au moins deux plages ($B_1$, $B_2$, ..., $B_m$) dans les fréquences ($f_1$, $f_2$, ..., $f_m$), une différence des angles de phase ($\Delta_{\varphi} = \varphi_{i+1} - \varphi_i$) étant déterminée, l'accélération relative étant déterminée à partir de la différence.

2. Dispositif selon la revendication 1, **caractérisé en ce qu'**à chaque fois au moins une fréquence ($f_1$, $f_2$, ..., $f_m$) de la ligne spectrale est déterminée en plus dans les fréquences ($f_1$, $f_2$, ..., $f_m$), au moins une différence des fréquences ($f_1$, $f_2$, ..., $f_m$) étant déterminée, l'accélération relative étant déterminée à partir de la différence.

3. Dispositif selon la revendication 1 ou 2, **caractérisé en ce que** le détecteur est réalisé sous la forme d'un détecteur radar (12), des ondes électromagnétiques pouvant être émises et pouvant être reçues sous la forme d'un signal de mesure (y) par le détecteur radar (12).

4. Dispositif selon la revendication 2 ou 3, **caractérisé en ce que** la période d'observation $T_{mess}$ peut être divisée en deux plages ($B_1$, $B_2$) de même taille avec les fréquences associées ($f_1$, $f_2$), la relation ci-après s'appliquant approximativement pour l'accélération relative :

$$a \approx \frac{c}{2 f_T} \frac{f_2 - f_1}{T_{mess}/2} = \frac{c}{f_T} \frac{f_2 - f_1}{T_{mess}},$$

avec la fréquence porteuse ($f_T$), la période d'observation ($T_{mess}$), la vitesse de la lumière (c) ainsi que les fréquences ($f_1$, $f_2$) déterminées dans les deux plages ($B_1$, $B_2$).

5. Dispositif selon l'une des revendications 1 à 3, **caractérisé en ce que** la période d'observation $T_{mess}$ peut, par portions, être divisée de manière séquentielle, toutes les plages ($B_1$, $B_2$, ..., $B_m$) comprenant un nombre égal de valeurs mesurées.

6. Dispositif selon l'une des revendications précédentes, **caractérisé en ce que** les fréquences ($f_1$; •$f_2$, ..., $f_m$) peuvent être déterminées au moyen d'une transformation de Fourier.

7. Dispositif selon l'une des revendications précédentes, **caractérisé en ce que** le signal de mesure (y) peut être divisé en au moins deux plages (B$_1$, B$_2$, ..., B$_m$), une plage (B$_1$, B$_2$, ..., B$_m$) étant formée par un certain nombre (N$_0$) de valeurs mesurées et les valeurs mesurées des plages successives (B$_1$, B$_2$, ..., B$_m$) étant décalées d'une séquence de pas (k), avec $1 \leq k < N_0$.

**8.** Dispositif selon l'une des revendications précédentes, **caractérisé en ce que** les valeurs de l'accélération relative (a) peuvent être utilisées au moins par un système d'assistance à la conduite.

**9.** Procédé de détection d'une accélération relative (a) entre un véhicule (1) et un objet, le véhicule (1) comprenant au moins un détecteur qui émet une onde électromagnétique à la fréquence porteuse (f$_T$) et au moins un signal de mesure (y) étant détecté par le détecteur sur une période d'observation T$_{mess}$, le signal de mesure (y) étant de forme ondulatoire et résultant de la réflexion du signal à la fréquence porteuse (f$_T$) sur un objet, une fréquence Doppler étant déterminée à partir du signal de mesure (y) dans la période d'observation T$_{mess}$ par une analyse en fréquence du signal de mesure (y),
**caractérisé en ce que**
la période T$_{mess}$ est divisée en au moins deux plages (B$_1$, B$_2$, ..., B$_m$), à chaque fois au moins un angle de phase ($\varphi_1$, $\varphi_2$, ..., $\varphi_m$) des lignes spectrales étant déterminé pour au moins deux plages (B$_1$, B$_2$, ..., B$_m$) dans les fréquences (f$_1$, f$_2$, ..., f$_m$), au moins une différence des angles de phase ($\Delta\varphi = \varphi_{i+1} - \varphi_i$) étant déterminée, l'accélération relative étant déterminée à partir de là différence. '

**10.** Procédé selon la revendication 9, **caractérisé en ce qu'**à chaque fois au moins une fréquence (f$_1$, f$_2$, ..., f$_m$) de la ligne spectrale est déterminée en plus dans les fréquences (f$_1$, f$_2$, ..., f$_m$), au moins une différence des fréquences (f$_1$, f$_2$, ..., f$_m$) étant déterminée, l'accélération relative étant déterminée à partir de la différence.

**11.** Procédé selon la revendication 9 ou 10, **caractérisé en ce que** le détecteur est réalisé sous la forme d'un détecteur radar (12), des ondes électromagnétiques étant émises et étant reçues sous la forme d'un signal de mesure (y) par le détecteur radar (12).

**12.** Procédé selon la revendication 10 ou 11, **caractérisé en ce que** la période d'observation (T$_{mess}$) est divisée en deux plages (B$_1$, B$_2$) de même taille avec les fréquences associées (f$_1$, f$_2$), la relation ci-après s'appliquant approximativement pour l'accélération relative :

$$ a \;\approx\; \frac{c}{2f_T}\,\frac{f_2 - f_1}{T_{mess}/2} \;=\; \frac{c}{f_T \cdot T_{mess}}\,\frac{f_2 - f_1}{1}, $$

avec la fréquence porteuse (f$_T$), la période d'observation (T$_{mess}$), la vitesse de la lumière (c) ainsi que les fréquences (f$_1$, f$_2$) déterminées dans les deux plages (B$_1$, B$_2$) .

**13.** Procédé selon la revendication 10 ou 11, **caractérisé en ce que** la période d'observation (T$_{mess}$) est, par portions, divisée de manière séquentielle, toutes les plages (B$_1$, B$_2$, ..., B$_m$) comprenant un nombre égal de valeurs mesurées.

**14.** Procédé selon l'une des revendications 9 à 13, **caractérisé en ce que** les fréquences (f$_1$, f$_2$, ..., f$_m$) sont déterminées au moyen d'une transformation de Fourier.

**15.** Procédé selon l'une des revendications 9 à 14, **caractérisé en ce que** le signal de mesure (y) est divisé en au moins deux plages (B$_1$, B$_2$, ..., $_1$ B$_m$), une plage (B$_1$, B$_2$, ..., B$_m$) étant formée par un certain nombre (N$_0$) de valeurs mesurées et les valeurs mesurées des plages successives (B$_1$, B$_2$, ..., B$_m$) étant décalées d'une séquence de pas (k), avec $1 \leq k < N_0$.

**16.** Procédé selon l'une des revendications 9 à 15, **caractérisé en ce que** les valeurs de l'accélération relative (a) sont utilisées au moins par un système d'assistance à la conduite.

FIG. 1

EP 1 431 775 B1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4007249 A1
- WO 0148512 A1
- EP 1028323 A2
- US 6380883 B1
- US 6087928 A